# EUROPEAN PATENT APPLICATION

(11) **EP 2 687 948 A2**
(43) Date of publication of application: **22.01.2014**
(21) Application number: 13176990.3
(22) Date of filing: 18.07.2013
(51) Int. Cl.: G06F 3/01

(54) **Apparatus and method for controlling operation mode of device using gesture recognition**

(30) Priority: 18.07.2012 KR 20120078409; 08.05.2013 KR 20130051855
(71) Applicant: Samsung Electronics Co., Ltd, Gyeonggi-do 443-742 (KR)
(72) Inventor: Lee, Jun Haeng, 446-712 Gyeonggi-do (KR); Lee, Kyoobin, 446-712 Gyeonggi-do (KR); Delbruck, Tobi, 446-712 Gyeonggi-do (KR); Berner, Raphael, 446-712 Gyeonggi-do (KR); Ryu, Hyun Surk, 446-712 Gyeonggi-do (KR)
(74) Representative: Hylarides, Paul Jacques

(57) **Abstract**

An apparatus and method for controlling an operation mode of a device using gesture recognition using temporal change of light intensity.

## Description

### BACKGROUND

### 1. Field

Methods and apparatuses consistent with exemplary embodiments relate to an apparatus and method for controlling an operation mode of a device using gesture recognition, and more particularly, an apparatus and method that may temporally detect a change in a light intensity associated with a motion of an object, recognize a gesture of a user, and control an operation mode of a device based on the recognized gesture.

### 2. Description of the Related Art

Gesture recognition is a technology that recognizes a gesture of a user and interprets the recognized gesture as an input of a device. Gesture recognition technology has evolved from touch recognition and now includes remote and contactless gesture recognition.

Conventionally, to remotely recognize a gesture of a user, gesture recognition technology measures a distance between each body part of a user and a device using output light emitted from a light source and reflected light reflecting off the user.

Utilizing conventional gesture recognition technology, in which a light source is used to recognize a gesture of a user, it is therefore difficult to minimize power consumption in a power saving mode.

### SUMMARY

According to an aspect of an exemplary embodiment, there may be provided a device including a light intensity change detecting unit configured to detect a temporal change in a light intensity of at least one pixel of an image, a motion pattern recognizing unit configured to recognize motion pattern of an object in the image based on the temporal change in the light intensity of the at least one pixel, and an operation mode control unit configured to control an operation mode of the device based on the motion pattern.

The motion pattern recognizing unit may be configured to recognize the motion pattern of the object based on a number of occurrences of the temporal change in the light intensity of the at least one pixel.

The motion pattern recognizing unit may be configured to recognize the motion pattern of the object based on an interval between occurrences of the temporal change in the light intensity of the at least one pixel.

The motion pattern recognizing unit may be configured to recognize th the motion pattern of the object based on a number of occurrences of the temporal change in the light intensity of the at least one pixel that exceeds a reference value.

The motion pattern recognizing unit may be configured to recognize the motion pattern of the object based on a time interval in which a number of occurrences of the temporal change in the light intensity of the at least one pixel that exceeds a reference value.

The motion pattern recognizing unit may be configured to recognize the motion pattern of the object based on directions of occurrences of the temporal change in the light intensity of the at least one pixel.

The motion pattern recognizing unit may be configured to recognize the motion pattern of the object based on types of occurrences of the temporal change in the light intensity of the at least one pixel.

According to an aspect of an exemplary embodiment, there may be provided a device including a light intensity change detecting unit configured to detect a temporal change in a light intensity of at least one pixel of an image, a shape recognizing unit configured to recognize a shape of an object in the image based on the temporal change in the light intensity of the at least one pixel, and an operation mode control unit configured to control an operation mode of the device based on the shape of the object.

The shape recognizing unit may be configured to identify a type of the object based on the temporal change in the light intensity of the at least one pixel, and may be configured to recognize the shape of the object based on the identified type of the object.

The shape recognizing unit may be configured to recognize a location in which a change occurs in the shape of the object based on locations of the at least one pixel in which the temporal change in the light intensity is detected.

The shape recognizing unit may be configured to recognize the shape of the object based on at least one type of occurrence of the temporal change in the light intensity of the at least one pixel.

The shape recognizing unit may be configured to delete a shape corresponding to the occurrence from the shape of the object if the occurrence corresponds to an occurrence associated with an increase in the light intensity.

The shape recognizing unit may be configured to add a shape corresponding to the occurrence to the shape of the object if the occurrence corresponds to an occurrence associated with a decrease in the light intensity.

According to an aspect of an exemplary embodiment, there may be provided a method of operating a device, the method including detecting a temporal change in a light intensity of at least one pixel of an image, recognizing a motion pattern of an object in the image based on the temporal change in the light intensity of the at least one pixel, and controlling an operation mode of the device based on the motion pattern.

According to an aspect of an exemplary embodiment, there may be provided a method of operating a device, the method including detecting a temporal change in a light intensity of at least one pixel of an image, recognizing a shape of an object in the image based on the temporal change in the light intensity of the at least one pixel, and controlling an operation mode of the device based on the shape of the object.

According to an aspect of an exemplary embodiment, there may be provided a non-transitory computer-readable medium having embodied thereon a program for instructing a computer to perform the methods according to the exemplary embodiments.

### BRIEF DESCRIPTION OF THE DRAWINGS

The above and other aspects will become apparent and more readily appreciated from the following detailed description of certain exemplary embodiments, taken in conjunction with the accompanying drawings of which:
FIG. 1 is a diagram illustrating a structure of a device according to an exemplary embodiment;
FIG. 2 is a diagram illustrating examples of events output from a light intensity change detecting unit according to an exemplary embodiment;
FIG. 3 is a diagram illustrating an example of recognizing a motion pattern of an object using a number of events output from a light intensity change detecting unit according to an exemplary embodiment;
FIG. 4 is a diagram illustrating an example of recognizing a motion pattern of an object using directions of events output from a light intensity change detecting unit according to an exemplary embodiment;
FIG. 5 is a graph illustrating an example of recognizing a motion pattern of an object using types of events output from a light intensity change detecting unit according to an exemplary embodiment;
FIG. 6 is a diagram illustrating a structure of a device according to another exemplary embodiment;
FIG. 7 is a diagram illustrating an example of recognizing a shape of an object according to an exemplary embodiment;
FIG. 8 is a flowchart illustrating a method of operating a device according to an exemplary embodiment; and
FIG. 9 is a flowchart illustrating a method of operating a device according to another exemplary embodiment.

### DETAILED DESCRIPTION

Reference will now be made in detail to exemplary embodiments, examples of which are illustrated in the accompanying drawings, wherein like reference numerals refer to the like elements throughout. The exemplary embodiments are described below to explain the present disclosure by referring to the figures.

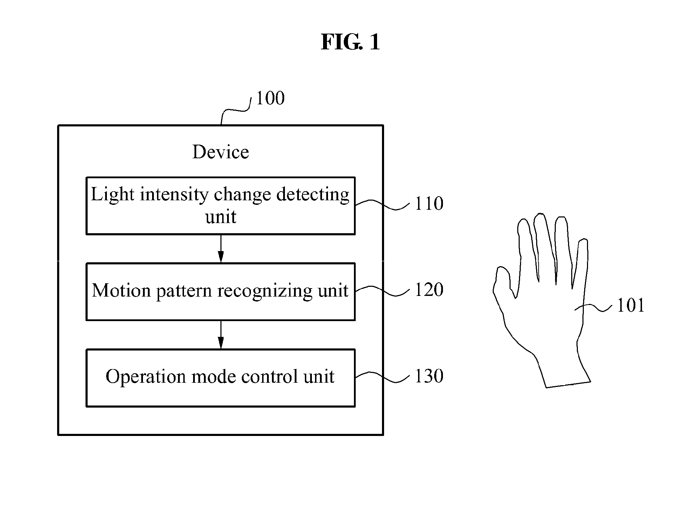

FIG. 1 is a diagram illustrating a structure of a device 100 according to an exemplary embodiment.

The device 100 according to an exemplary embodiment may control an operation of the device 100 by recognizing a gesture.

In this instance, the device 100 may be any of a mobile phone, a tablet personal computer (PC), a laptop computer, a desktop computer, etc. The device 100 may include a processor controlling operations of the device 100 for implementing functions of the units, and may be connected with a memory to which information is read from and written to by the processor through a bus connecting components of the device 100.

The operation may be the control of an operational mode of the device. Also, the operation mode may include a power saving mode in which some functions of a device are deactivated to reduce power consumption, and a normal mode in which all functions of a device are activated.

Referring to FIG. 1, the device 100 may include a light intensity change detecting unit 110, a motion pattern recognizing unit 120, and an operation mode control unit 130.

The light intensity change detecting unit 110 may detect a temporal change in a light intensity associated with a motion of an object 101. The object 101 may correspond to one or more body parts of the user, for example, a hand, and an object that may be controlled by the user.

Here, the light intensity may denote a standard for determining an increase or a decrease in an intensity of light falling on a pixel of an image caused by a motion of the object 101.

For example, when an object moves from a location A to a location B, light falling on the location B may be interrupted when the object moves to the location B. Accordingly, an intensity of light falling on a pixel when the object moves to the location B may be reduced. Also, when the object moves from the location B to the location A, the location B may accommodate incident light by the movement of the object to the location A. Accordingly, an intensity of light falling on a pixel when the object moves to the location B may be increased. That is, an intensity of light falling on a pixel in an image may temporally change, in accordance with a motion of an object.

The light intensity change detecting unit 110 may correspond to a temporal contrast vision sensor that may detect a temporal change in an intensity of light falling on a pixel of an image and may output an event based on the detected temporal change in the light intensity. The temporal change in the light intensity may correspond to whether the light intensity changes over time or a value of the change in the light intensity over time.

For example, the temporal contrast vision sensor may output an ON event when an intensity of light falling on a pixel of an image increases, and may output an OFF event when an intensity of light falling on a pixel of an image decreases. Also, the temporal contrast vision sensor may operate in an asynchronous, frame-free approach, and may have a temporal resolution of 10 microseconds (µs) or less.

The motion pattern recognizing unit 120 may recognize a motion pattern of the object 101 using the temporal change in the light intensity detected by the light intensity change detecting unit 110. The motion pattern of the object 101 may correspond to at least one of a number of movements and a movement direction of the object 101 within a detection range of the light intensity change detecting unit 110.

The motion pattern recognizing unit 120 may recognize the motion pattern of the object 101 using a number of events output from the light intensity change detecting unit 110. The number of events output from the light intensity change detecting unit 110 may correspond to a number of occurrences based on the temporal change in the light intensity. Also, the number of events output from the light intensity change detecting unit 110 may correspond to a number of movements of the object 101 within the detection range of the light intensity change detecting unit 110.

The motion pattern recognizing unit 120 may recognize the motion pattern of the object 101 by counting the number of events output from the light intensity change detecting unit 110 and determining that the number of events exceeds a reference value.

For example, when the user puts the device 100 in a pocket or a bag, a change in a light intensity may cause an event. Accordingly, when a number of events output from the light intensity change detecting unit 110 for a predetermined period of time exceeds a reference value, the motion pattern recognizing unit 120 may determine the corresponding events to be intentionally input and may recognize the motion pattern of the object 101 using the corresponding events. Alternatively, when the number of events output from the light intensity change detecting unit 110 for a predetermined period of time does not exceed the reference value, the motion pattern recognizing unit 120 may determine the corresponding events to be unintentionally input, and may discard the events and may not recognize the motion pattern of the object 101.

The reference value may correspond to a number of occurrences for determining whether an event output from the light intensity change detecting unit 110 corresponds to an event occurring according to an intent of the user. The reference value may be determined based on a motion pattern corresponding to an operation mode.

The reference value may be set to, for example, any number of occurrences per period of time. When a number of occurrences for a predetermined period meets or exceeds the reference value, the operation mode control unit 130 may change an operation mode. Here, occurrences prior to the reference value may have only a modest influence the control of the operation mode. Accordingly, by setting the reference value to a threshold value representative of the user's intention to input a command through a gesture, an event intended by the user may be identified among events influencing on the control of the operation mode.

Also, when the number of events output from the light intensity change detecting unit 110 exceeds the reference value, the motion pattern recognizing unit 120 may determine the extent to which the number of events exceeds the reference value and may recognize the motion pattern of the object 101 using the difference by subtracting the reference value from the number of events.

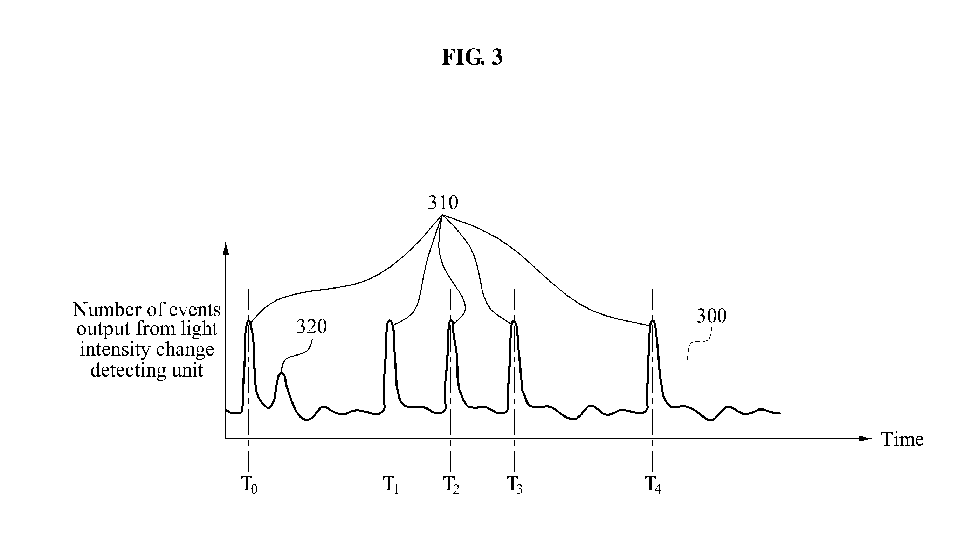

A further detailed description of the motion pattern recognizing unit 120 recognizing the motion pattern of the object 101 using a number of events output from the light intensity change detecting unit 110 is provided with reference to FIG. 3.

The motion pattern recognizing unit 120 may recognize the motion pattern of the object 101 using an interval between occurrences based on the temporal change in the light intensity. In this instance, the interval between occurrences based on the temporal change in the light intensity may correspond to a time interval between outputs of events from the light intensity change detecting unit 110. Also, the motion pattern recognizing unit 120 may recognize the motion pattern of the object 101 using a time interval between occurrences in which the number of events output from the light intensity change detecting unit 110 exceeds the reference value.

For example, when the user moves the object 101 in a predetermined pattern, the time interval between the outputs of the events from the light intensity change detecting unit 110 may form a predetermined pattern. Accordingly, the motion pattern recognizing unit 120 may recognize the motion pattern of the object 101 by identifying a rhythm or a distance in which the user moves the object 101 using the time interval between the outputs of the events from the light intensity change detecting unit 110.

Also, the motion pattern recognizing unit 120 may recognize the motion pattern of the object 101 using directions of events based on the temporal change in the light intensity. The motion pattern recognizing unit 120 may recognize the motion pattern of the object 101 using locations or movement directions of pixels corresponding to the temporal change in the light intensity detected by the light intensity change detecting unit 110 among pixels of a continuous image.

For example, the motion pattern recognizing unit 120 may recognize the motion pattern of the object 101 using directions in which a change occurs in locations of corresponding events in the continuous image when the number of events output from the light intensity change detecting unit 110 exceeds the reference value.

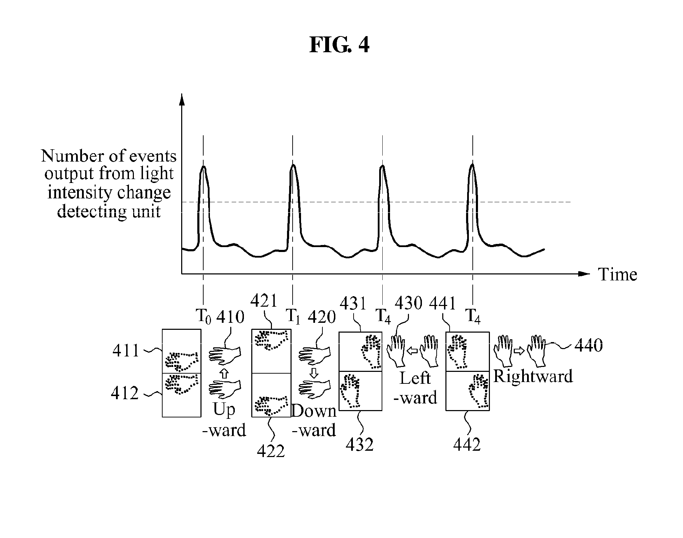

A further detailed description of the motion pattern recognizing unit 120 recognizing the motion pattern of the object 101 using directions of events is provided with reference to FIG. 4.

The motion pattern recognizing unit 120 may recognize the motion pattern of the object 101 using types of events based on the temporal change in the light intensity. The light intensity change detecting unit 110 may output an ON event corresponding to a pixel of an image when an intensity of light falling on the pixel increases, and may output an OFF event corresponding to a pixel of an image when an intensity of light falling on the pixel decreases.

For example, when the object 101 is close to the light intensity change detecting unit 110, a range in which light falling on the light intensity change detecting unit 110 is interrupted by the object 101 may increase, and consequently, a number of pixels having a decreasing light intensity may increase. That is, when the object 101 is close to the light intensity change detecting unit 110, a number of pixels corresponding to OFF events to be output from the light intensity change detecting unit 110 may increase, and consequently, a number of OFF events output from the light intensity change detecting unit 110 may increase.

When the object 101 is far from the light intensity change detecting unit 110, a range in which light falling on the light intensity change detecting unit 110 is interrupted by the object 101 may decrease, and consequently, a number of pixels having an increasing light intensity may increase. That is, when the object 101 is far from the light intensity change detecting unit 110, a number of pixels corresponding to ON events to be output from the light intensity change detecting unit 110 may increase, and consequently, a number of ON events output from the light intensity change detecting unit 110 may increase.

When a number of OFF events increases among events output from the light intensity change detecting unit 110, the motion pattern recognizing unit 120 may recognize the motion pattern of the object 101 to be a motion pattern of the object 101 moving close to the device 100. When a number of ON events increases among events output from the light intensity change detecting unit 110, the motion pattern recognizing unit 120 may recognize the motion pattern of the object 101 to be a motion pattern of the object 101 moving far from the device 100.

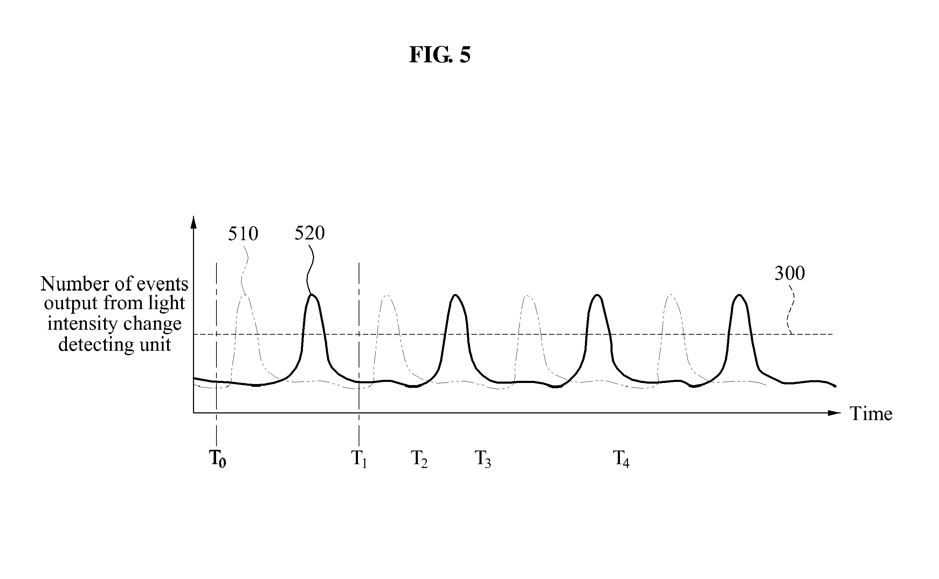

A further detailed description of the motion pattern recognizing unit 120 recognizing the motion pattern of the object 101 using types of events is provided with reference to FIG. 5.

The motion pattern recognizing unit 120 may recognize the motion pattern of the object 101 based on locations of output of an ON event and an OFF event. The motion pattern recognizing unit 120 may recognize the motion pattern of the object 101 based on a movement from a location of output of an ON event to a location of output of an OFF event.

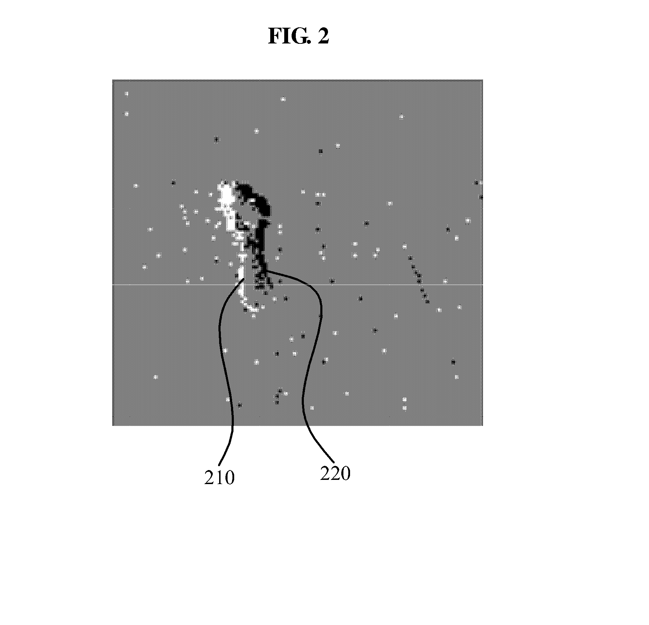

The relationship between the location of output of the ON event and the location of output of the OFF event is described in further detail with reference to FIG. 2.

The operation mode control unit 130 may control an operation mode of the device 100 based on the motion pattern recognized by the motion pattern recognizing unit 120. The operation mode control unit 130 may identify a motion pattern having a high correlation with the motion pattern recognized by the motion pattern recognizing unit 120 between a motion pattern corresponding to a power saving mode and a motion pattern corresponding to a normal mode, and may execute an operation mode corresponding to the identified motion pattern.

For example, in a case in which the device 100 operates in a power saving mode, the operation mode control unit 130 may stop the power saving mode and change to a normal mode when the motion pattern recognized by the motion pattern recognizing unit 120 has a high correlation with a motion pattern corresponding to the normal mode. In a case in which the device 100 operates in a normal mode, when the motion pattern recognized by the motion pattern recognizing unit 120 has a high correlation with a motion pattern corresponding to a normal mode, the operation mode control unit 130 may maintain the operation mode of the device 100 in the normal mode.

FIG. 2 is a diagram illustrating examples of events output from the light intensity change detecting unit 110 according to an exemplary embodiment.

The light intensity change detecting unit 110 may detect a temporal change in a light intensity, and may output events associated with motion of the object 101.

For example, when a right hand of a user moves from a location A 210 to a location B 220, an intensity of light falling on a pixel when the hand moves to the location A 210 may increase, and the light intensity change detecting unit 110 may output an ON event for the pixel when the hand moves to the location A 210. Also, an intensity of light falling on a pixel when the hand moves to the location B 220 may decrease due to the presence of the right hand of the user, and the light intensity change detecting unit 110 may output an OFF event for the pixel when the hand moves to the location B 220.

That is, the light intensity change detecting unit 110 may output locations of pixels in which an increase or a decrease in the light intensity take place due to the movement of the object 101 as shown in FIG. 2, to enable the motion pattern recognizing unit 120 to recognize whether the object 101 moved and a movement direction of the object 101.

FIG. 3 is a diagram illustrating an example of recognizing the motion pattern of the object 101 using a number of events output from the light intensity change detecting unit 110 according to an exemplary embodiment.

The light intensity change detecting unit 110 may output an event when a light intensity changes. Accordingly, a number of events from the light intensity change detecting unit 110 may increase with the temporal change of the light intensity when the object 101 moves.

In this instance, when the number of events output from the light intensity change detecting unit 110 exceeds a reference value 300, the motion pattern recognizing unit 120 may recognize the motion pattern of the object 101 using corresponding events 310. When the number of events exceeds the reference value 300, the motion pattern recognizing unit 120 may recognize the motion pattern of the object 101 using a number of outputs of the corresponding events 310.

When the number of events 320 output from the light intensity change detecting unit 110 is less than or equal to the reference value 300, the motion pattern recognizing unit 120 may determine a corresponding event to be an unintended event and may not add the corresponding event to the motion pattern.

Also, the motion pattern recognizing unit 120 may recognize the motion pattern of the object 101 using an interval between occurrences based on the temporal change in the light intensity. When the number of events exceeds the reference value 300, the motion pattern recognizing unit 120 may store a time interval between occurrences of the corresponding events 310 to be the motion pattern of the object 101. The motion pattern recognizing unit 120 may compare the stored time interval of occurrences of the corresponding events 310 to a time interval for changing the operation mode, and may determine whether to change the operation mode based on a result of the comparison.

FIG. 4 is a diagram illustrating an example of recognizing the motion pattern of the object 101 using directions of events output from the light intensity change detecting unit 110 according to an exemplary embodiment.

When the number of events exceeds the reference value 300, the motion pattern recognizing unit 120 may recognize the motion pattern of the object 101 using directions of the corresponding events 310.

For example, when the object 101 makes an upward movement 410, locations of events included in a second output 412 from the light intensity change detecting unit 110 may correspond to a location moved in an upward direction, compared to locations of events included in a first output 411 from the light intensity change detecting unit 110. Accordingly, the motion pattern recognizing unit 120 may recognize, to be the movement direction of the object 101, a movement direction from the locations of the events included in the first output 411 compared to the locations of the events included in the second output 412.

When the object 101 makes a downward movement 420, locations of events included in a second output 422 from the light intensity change detecting unit 110 may correspond to a location moved in a downward direction, compared to locations of events included in a first output 421 from the light intensity change detecting unit 110. Accordingly, the motion pattern recognizing unit 120 may recognize, to be the movement direction of the object 101, a movement direction from the locations of the events included in the first output 421 compared to the locations of the events included in the second output 422.

When the object 101 makes a leftward movement 430, locations of events included a second output 432 from the light intensity change detecting unit 110 may correspond to a location moved in a leftward direction, compared to locations of events included in a first output 431 from the light intensity change detecting unit 110. Accordingly, the motion pattern recognizing unit 120 may recognize, to be the movement direction of the object 101, a movement direction from the locations of the events included in the first output 431 compared to the locations of the events included in the second output 432.

When the object 101 makes a rightward movement 440, locations of events included a second output 442 from the light intensity change detecting unit 110 may correspond to a location moved in a rightward direction, compared to locations of events included in a first output 441 from the light intensity change detecting unit 110. Accordingly, the motion pattern recognizing unit 120 may recognize, to be the movement direction of the object 101, a movement direction from the locations of the events included in the first output 441 compared to the locations of the events included in the second output 442.

FIG. 5 is a diagram illustrating an example of recognizing the motion pattern of the object 101 using types of events output from the light intensity change detecting unit 110 according to an exemplary embodiment.

When an intensity of light falling on a pixel of an image decreases, the light intensity change detecting unit 110 may output an OFF event 510, and when an intensity of light falling on a pixel of an image increases, the light intensity change detecting unit 110 may output an ON event 520.

Also, when the object 101 is close to the light intensity change detecting unit 110, a range in which light falling on the light intensity change detecting unit 110 is interrupted by the object 101 may increase, and consequently, a number of pixels having a decreasing light intensity may increase. That is, when the object 101 is close to the light intensity change detecting unit 110, a number of pixels corresponding to OFF events to be output from the light intensity change detecting unit 110 may increase, and consequently, a number of OFF events output from the light intensity change detecting unit 110 may increase. In this instance, when the number of OFF events 510 output from the light intensity change detecting unit 110 exceeds the reference value 300, the motion pattern recognizing unit 120 may recognize the motion pattern of the object 101 to be a motion pattern of the object 101 moving close to the device 100.

When the object 101 is far from the light intensity change detecting unit 110, a range in which light falling on the light intensity change detecting unit 110 is interrupted by the object 101 may decrease, and consequently, a number of pixels having an increasing light intensity may increase. That is, when the object 101 is far from the light intensity change detecting unit 110, a number of pixels corresponding to ON events to be output from the light intensity change detecting unit 110 may increase, and consequently, a number of ON events output from the light intensity change detecting unit 110 may increase. In this instance, when the number of ON events 520 output from the light intensity change detecting unit 110 exceeds the reference value 300, the motion pattern recognizing unit 120 may recognize the motion pattern of the object 101 to be a motion pattern of the object 101 moving far from the device 100.

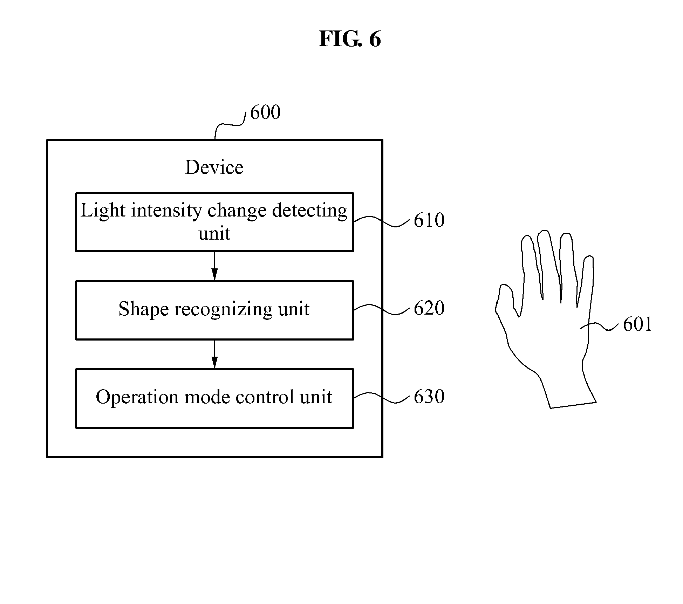

FIG. 6 is a diagram illustrating a structure of a device 600 according to another exemplary embodiment.

Referring to FIG. 6, the device 600 may control an operation mode of the device 600 by recognizing a shape of an object 601 changing based on a gesture of a user. For example, the device 600 may recognize a shape of a hand of the user on which fingers are being folded and unfolded.

If the shape of the hand of the user changes, when the user unfolds five fingers and folds the fingers again, the device 600 may recognize a motion of the five fingers. In this instance, the device 600 may identify that the object 601 corresponds to a hand of the user when the user unfolds the five fingers, and may identify that the user makes a fist when the user folds the five fingers again.

Referring to FIG. 6, the device 600 may include a light intensity change detecting unit 610, a shape recognizing unit 620, and an operation mode control unit 630.

The light intensity change detecting unit 610 may detect a temporal change in a light intensity associated with a motion of the object 601 for each pixel of an image. For example, the light intensity change detecting unit 610 may correspond to a temporal contrast vision sensor that may detect a temporal change in an intensity of light falling on a pixel of an image and may output an event based on the temporal change in the light intensity.

The shape recognizing unit 620 may recognize a shape of the object 601 using the temporal change in the light intensity detected by the light intensity change detecting unit 610. The shape recognizing unit 620 may identify a type of the object 601 using the temporal change in the light intensity detected by the light intensity change detecting unit 610 and may recognize the shape of the object 601 using the identified type of the object 601.

For example, when the user unfolds five fingers and folds the fingers again, the shape recognizing unit 620 may recognize five objects based on a motion of the fingers. In this instance, the shape recognizing unit 620 may estimate the objects to be fingers based on a size and a shape of the objects. Next, the shape recognizing unit 620 may estimate a location of a palm based on locations and motions of the fingers, and may recognize a shape of a hand corresponding to the shape of the objects.

The shape recognizing unit 620 may recognize a location in which a change occurs in the shape of the object 601 using a location of each pixel in which the temporal change in the light intensity is detected by the light intensity change detecting unit 610.

Also, the shape recognizing unit 620 may recognize the shape of the object 601 using types of events based on the temporal change in the light intensity. When an event corresponds to an event associated with an increasing light intensity, the shape recognizing unit 620 may delete a shape corresponding to the event from the shape of the object 601. For example, when an event associated with a finger corresponds to an ON event, the shape recognizing unit 620 may determine that the light intensity increases due to a finger folding motion, and may recognize the shape of the object 601 to be a shape of a closed hand in the shape of a fist by deleting a shape of fingers from a shape of a hand.

When an event corresponds to an event associated with a decreasing light intensity, the shape recognizing unit 620 may add a shape corresponding to the event to the shape of the object 601. For example, when an event associated with a finger corresponds to an OFF event, the shape recognizing unit 620 may determine that the light intensity decreases due to a finger unfolding motion, and may recognize the shape of the object 601 to be a shape of an open hand by adding a shape of fingers to a shape of a palm.

The operation mode control unit 630 may control an operation mode of the device 600 based on the shape of the object 601 recognized by the shape recognizing unit 620.

The operation mode control unit 630 may identify a shape of the object having a high correlation with the shape of the object 601 recognized by the shape recognizing unit 620 between a shape of the object corresponding to a power saving mode and a shape of the object corresponding to a normal mode, and may execute an operation mode corresponding to the identified shape of the object 601.

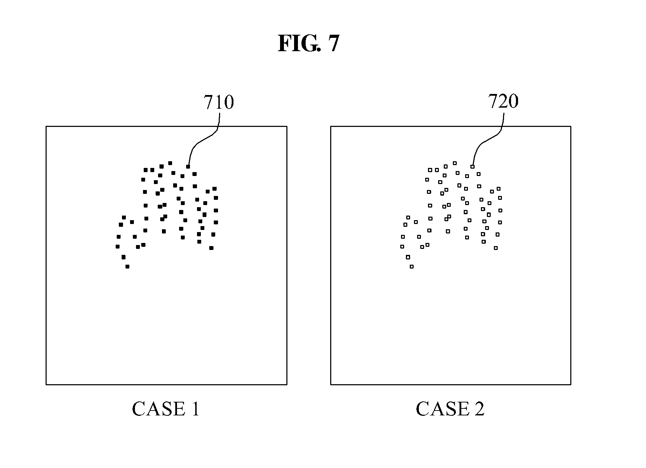

FIG. 7 is a diagram illustrating an example of recognizing the shape of the object according to an exemplary embodiment.

When the user folds five fingers, the light intensity change detecting unit 610 may output ON events 710 corresponding to locations of the fingers as shown in Case 1.

In this instance, the shape recognizing unit 620 may estimate an object to be fingers based on a size and a shape of the ON events 710. Next, the shape recognizing unit 620 may estimate a location of a palm based on a location and a motion of the fingers, and may recognize a shape of a hand corresponding to the shape of the object.

Since events from the light intensity change detecting unit 610 correspond to the ON events 710, the shape recognizing unit 620 may recognize the shape of the object to be a shape of a clenched fist by deleting the shape of the fingers from the shape of the hand.

When the user unfolds five fingers, the light intensity change detecting unit 610 may output OFF events 720 corresponding to locations of the fingers as shown in Case 2.

In this instance, the shape recognizing unit 620 may estimate an object to be fingers based on a size and a shape of the OFF events 720. Next, the shape recognizing unit 620 may estimate a location of a palm based on a location and a motion of the fingers, and may recognize a shape of a hand corresponding to the shape of the object.

Since events from the light intensity change detecting unit 610 correspond to the OFF events 720, the shape recognizing unit 620 may recognize the shape of the object to be a shape of an open hand by adding the shape of the fingers from the shape of the palm.

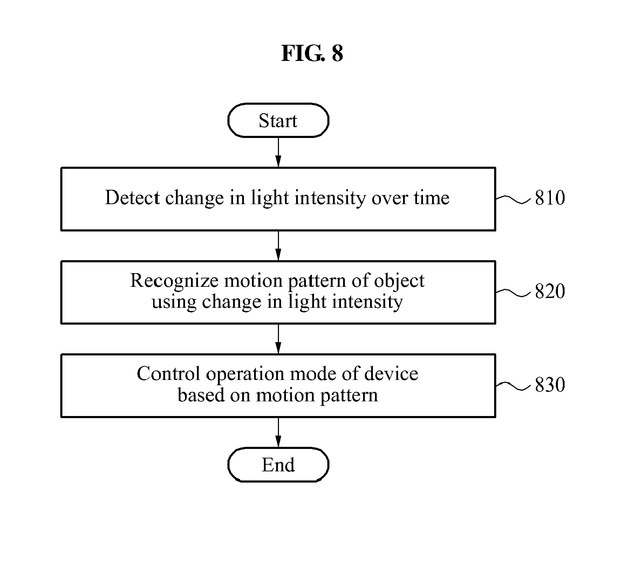

FIG. 8 is a flowchart illustrating a method of operating the device 100 according to an exemplary embodiment.

Referring to FIG. 8, in operation 810, the light intensity change detecting unit 110 may detect a temporal change in a light intensity associated with a motion of the object 101. For example, when the object 101 moves into a detection range of the light intensity change detecting unit 110, light falling on the light intensity change detecting unit 110 may be interrupted by the object 101, and consequently, an intensity of light incident on a pixel corresponding to a location of the object 101 may decrease. When the object 101 makes a movement within the detection range of the light intensity change detecting unit 110, light interrupted by the object 101 may fall on the light intensity change detecting unit 110, and consequently, an intensity of light incident on a pixel corresponding to a location of the object 101 may increase.

In operation 820, the motion pattern recognizing unit 120 may recognize a motion pattern of the object 101 using the temporal change in the light intensity detected in operation 810.

In this instance, the motion pattern recognizing unit 120 may recognize the motion pattern of the object 101 using at least one of a number of events output from the light intensity change detecting unit 110, an interval between occurrences of the events, directions of the events, and types of the events.

In operation 830, the operation mode control unit 130 may control an operation mode of the device 100 based on the motion pattern recognized in operation 820.

The operation mode control unit 130 may identify a motion pattern having a high correlation with the motion pattern recognized by the motion pattern recognizing unit 120 between a motion pattern corresponding to a power saving mode and a motion pattern corresponding to a normal mode, and may execute an operation mode corresponding to the identified motion pattern.

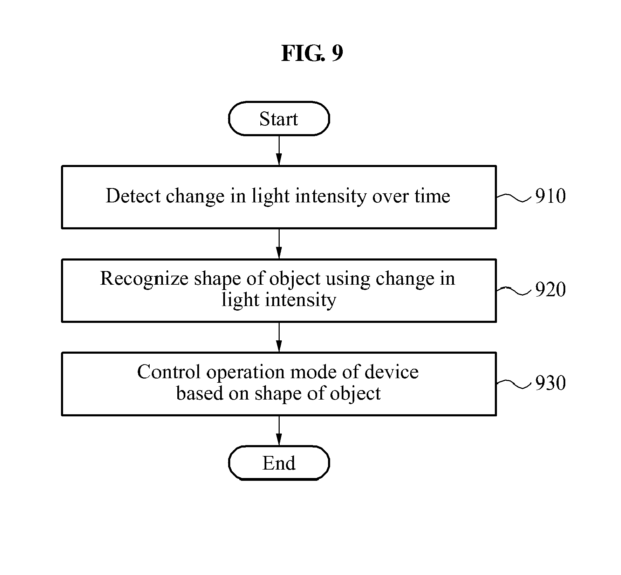

FIG. 9 is a flowchart illustrating a method of operating a device according to another exemplary embodiment.

Referring to FIG. 9, in operation 910, the light intensity change detecting unit 610 may detect a change in a light intensity associated with a motion of the object 601, temporally, for each pixel of an image.

In operation 920, the shape recognizing unit 620 may recognize a shape of the object 601 using the temporal change in the light intensity detected in operation 910.

The shape recognizing unit 620 may identify a type of the object 601 using the temporal change in the light intensity detected by the light intensity change detecting unit 610, and may recognize a shape of the object 601 using the identified type of the object 601.

Also, the shape recognizing unit 620 may recognize a changed shape of the object 601 using types of events based on the temporal change in the light intensity.

When an event corresponds to an event associated with an increasing light intensity, the shape recognizing unit 620 may delete a shape corresponding to the event from the shape of the object 601. For example, when an event associated with a finger corresponds to an ON event, the shape recognizing unit 620 may determine that the light intensity increases due to a finger folding motion, and may recognize the shape of the object to be a shape of a clenched fist by deleting a shape of fingers from a shape of a hand.

In operation 930, the operation mode control unit 630 may control an operation mode of the device 600 based on the shape of the object 601 recognized in operation 920.

The operation mode control unit 630 may identify a shape of the object having a high correlation with the shape of the object 601 recognized by the shape recognizing unit 620 between a shape of the object corresponding to a power saving mode and a shape of the object corresponding to a normal mode, and may execute an operation mode corresponding to the identified shape of the object 601.

The methods according to the above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard discs, floppy discs, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.

The term "...unit" used in the embodiments indicates a component including software or hardware, such as a Field Programmable Gate Array (FPGA) or an Application-Specific Integrated Circuit (ASIC), and the "...unit" performs certain roles. However, the "...unit" is not limited to software or hardware. The "...unit" may be configured to be included in an addressable storage medium or to reproduce one or more processors. Therefore, for example, the "...unit" includes components, such as software components, object-oriented software components, class components, and task components, processes, functions, attributes, procedures, subroutines, segments of program code, drivers, firmware, microcode, circuits, data, a database, data structures, tables, arrays, and variables. A function provided inside components and '...units' may be combined into a smaller number of components and '...units', or further divided into additional components and'...units'.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A device comprising:
a light intensity change detecting unit configured to detect a temporal change in a light intensity of at least one pixel of an image;
a motion pattern recognizing unit configured to recognize a motion pattern of an object in the image based on the temporal change in the light intensity of the at least one pixel or a shape recognizing unit configured to recognize a shape of an object in the image based on the temporal change in the light intensity of the at least one pixel; and
an operation mode control unit configured to control an operation mode of the device based on the motion pattern or the shape of the object.

2. The device of claim 1, wherein the motion pattern recognizing unit is configured to recognize the motion pattern of the object based on a number of occurrences of the temporal change in the light intensity of the at least one pixel and/or wherein the motion pattern recognizing unit is configured to recognize the motion pattern of the object based on an interval between occurrences of the temporal change in the light intensity of the at least one pixel and/or wherein the motion pattern recognizing unit is configured to recognize the motion pattern of the object based on a number of occurrences of the temporal change in the light intensity of the at least one pixel that exceeds a reference value.

3. The device of any of the preceding claims, wherein the motion pattern recognizing unit is configured to recognize the motion pattern of the object based on a time interval in which a number of occurrences of the temporal change in the light intensity of the at least one pixel that exceeds a reference value and/or wherein the motion pattern recognizing unit is configured to recognize the motion pattern of the object based on directions of occurrences of the temporal change in the light intensity of the at least one pixel and/or wherein the motion pattern recognizing unit is configured to recognize the motion pattern of the object based on types of occurrences of the temporal change in the light intensity of the at least one pixel.

4. The device of claim 1, wherein the shape recognizing unit is configured to identify a type of the object based on the temporal change in the light intensity of the at least one pixel, and is configured to recognize the shape of the object based on the identified type of the object.

5. The device of claim 1or 4, wherein the shape recognizing unit is configured to recognize a location in which a change occurs in the shape of the object based on locations of the at least one pixel in which the temporal change in the light intensity is detected, wherein the shape recognizing unit is preferably configured to recognize the shape of the object based on at least one type of occurrence of the temporal change in the light intensity of the at least one pixel.

6. The device of claim 5, wherein the shape recognizing unit is configured to delete a shape corresponding to the occurrence from the shape of the object if the occurrence corresponds to an occurrence associated with an increase in the light intensity and/or wherein the shape recognizing unit is configured to add a shape corresponding to the occurrence to the shape of the object if the occurrence corresponds to an occurrence associated with a decrease in the light intensity.

7. A method of operating a device, the method comprising:
detecting a temporal change in a light intensity of at least one pixel of an image;
recognizing a motion pattern of an object in the image based on the temporal change in the light intensity of the at least one pixel or recognizing a shape of an object in the image based on the temporal change in the light intensity of the at least one pixel;
and
controlling an operation mode of the device based on the motion pattern or on the shape of the object.

8. The method of claim 7, wherein the recognizing of the motion pattern comprises recognizing the motion pattern of the object based on a number of occurrences of the temporal change in the light intensity of the at least one pixel and/or wherein the recognizing of the motion pattern comprises recognizing the motion pattern of the object based on an interval between occurrences of the temporal change in the light intensity of the at least one pixel and/or wherein the recognizing of the motion pattern comprises recognizing the motion pattern of the object based on a number of occurrences of the temporal change in the light intensity of the at least one pixel that exceeds a reference value and/or wherein the recognizing of the motion pattern comprises recognizing the motion pattern of the object based on a time interval in which a number of occurrences of the temporal change in the light intensity of the at least one pixel that exceeds a reference value; and/or wherein the recognizing of the motion pattern comprises recognizing the motion pattern of the object based on directions of occurrences of the temporal change in the light intensity of the at least one pixel and/or wherein the recognizing of the motion pattern comprises recognizing the motion pattern of the object based on types of occurrences of the temporal change in the light intensity of the at least one pixel.

9. The method of claim 7, wherein the recognizing of the shape comprises identifying a type of the object based on the temporal change in the light intensity of the at least one pixel and recognizing the shape of the object based on the identified type of object.

10. The method of claim 7 or 9, wherein the recognizing of the shape comprises recognizing a location in which a change occurs in the shape of the object based on locations of the at least one pixel in which the temporal change in the light intensity is detected.

11. The method of claim 10, wherein the recognizing of the shape comprises recognizing the shape of the object based on at least one type of occurrence of the temporal change in the light intensity of the at least one pixel.

12. The method of claim 11, wherein the recognizing of the shape comprises deleting a shape corresponding to the occurrence from the shape of the object if the occurrence corresponds to an occurrence associated with an increase in the light intensity.

13. The method of claim 11 or 12, wherein the recognizing of the shape comprises adding a shape corresponding to the occurrence to the shape of the object if the occurrence corresponds to an occurrence associated with a decrease in the light intensity.

14. A non-transitory computer-readable medium having embodied thereon a program for instructing a computer to perform the method of any of claims 7-13.
